# EUROPEAN PATENT APPLICATION

(11) **EP 3 367 369 A1**
(43) Date of publication of application: **29.08.2018**
(21) Application number: 15908150.4
(22) Date of filing: 18.12.2015
(51) Int. Cl.: G09B 5/04

(54) **SOUND PRODUCTION INTERACTIVE PLATFORM CAPABLE OF SYNCHRONOUS SOUND PRODUCTION AND TOUCH PLAYING AND SYNCHRONOUS SOUND PRODUCTION METHOD THEREOF**

(30) Priority: 13.11.2015 CN 201510777682
(71) Applicant: Leo Paper Bags Manufacturing (1982) Limited, Hong Kong (CN); Heshan Astros Printing Ltd., Heshan, Guangdong 529700 (CN)
(72) Inventor: LAM, Cannie, Hong Kong (CN); YEUNG, Daniel, Hong Kong (CN)
(74) Representative: Westphal, Mussgnug & Partner Patentanwälte mbB
(86) International application number: PCT/CN2015/097878
(87) International publication number: WO 2017/080020

(57) **Abstract**

Disclosed are a sounding interactive platform for synchronous sounding triggered playing and a synchronous sounding method thereof, wherein the sounding interactive platform comprises a platform body as well as a sounding device (20) and a button device which are provided on the platform body, and wherein the sounding device (20) comprises a power module (204), a loudspeaker (201), a voice chip (202), and a sensing circuit board (203); the input end of the loudspeaker (201) is connected to the output end of the voice chip (202); the output end of the sensing circuit board (203) is connected to the input end of the voice chip (202); N types of voice sources are pre-stored in the voice chip (202); N sensing areas (205) which have one-to-one correspondence to the N types of voice sources and trigger the voice chip (202) to output the corresponding voice sources to the loudspeaker (201) are provided on the sensing circuit board (203); the button device comprises N buttons (206) which have one-to-one correspondence to the N sensing areas (205) and trigger the corresponding sensing areas (205) to respond. By using jigsaw puzzle pieces with specific patterns as switch connection points, a user can combine these jigsaw puzzle pieces to make the platform produce different sounds, thereby improving the interestingness and interactivity.

## Description

### FIELD OF THE INVENTION

The disclosure relates to a sounding interaction platform, and more particularly to a sounding interactive platform for synchronous sounding triggered playing and a synchronous sounding method thereof.

### BACKGROUND OF THE INVENTION

Electronic sounding books are educational readings that help children to develop their vision, audition and operational abilities. The children can play sound and music corresponding to reading contents by pressing a button. Most products of sounding interaction platform in market are that a button control unit controls a single playing switch, with simple design and low playability, and this type of products are low in interactivity, so that the user cannot operate and control it.

### SUMMARY OF THE INVENTION

In order to solve the technical problem above, the disclosure aims at providing a sounding interactive platform and a synchronous sounding method thereof that are low in cost, easy in pressing button and/or automatic sensing, easy in assembly, light in weight, random in installation of button portion and flexible in space arrangement.

The technical solution adopted in the disclosure is as follows.

A sounding interactive platform for synchronous sounding triggered playing comprises a platform body as well as a sounding device and a button device arranged on the platform body, wherein the sounding device comprises a power module as well as a loudspeaker, a voice chip, and a sensing circuit board respectively connected to the power module; an input end of the loudspeaker is connected to an output end of the voice chip; an output end of the sensing circuit board is connected to an input end of the voice chip; N types of sound sources are pre-stored in the voice chip; N sensing areas in one-to-one correspondence with the N types of sound sources and triggering the voice chip to output the corresponding sound sources to the loudspeaker to play are arranged on the sensing circuit board; and the button device comprises N buttons in one-to-one correspondence with the N sensing areas and triggering the corresponding sensing areas to respond, and wherein N≥2.

Preferably, the platform body is an electronic book body, a stage body, or other devices of different forms.

Further, the sensing area is a conductive printing ink with an independently coded pattern, a cold iron metal, a hot iron metal or a rigid PCB, but is not limited to this; and a bottom of the button is provided with a conductive printing ink, a metal for cold stamping, a metal for hot stamping or a rigid PCB corresponding to a coded pattern of the sensing area, but is not limited to this.

Further, the button is a jigsaw, a card or a plastic doll, but is not limited to this.

Further, the coded pattern is in a heart shape, a circle, a rectangle, an ellipse, a triangle or any regular or irregular shapes.

Further, a layer of lining paper is provided outside the conductive printing ink at the bottom of the button to cover the conductive printing ink. Certainly, the lining paper cannot be provided to cover the conductive printing ink, and the function cannot be affected.

A synchronous sounding method for the interactive platform comprises the following steps of: (A) starting a power supply and the N sensing areas on the sensing circuit board entering a waiting mode; (B) when any button is placed into a corresponding sensing area, starting all N sound source channels between the sensing circuit board and the voice chip, and outputting, by the voice channel responded in the sensing area, a corresponding sound source to the loudspeaker for sound playing, and the remaining voice channels playing silently; and (C) when the remaining sensing areas are triggered by corresponding buttons, switching corresponding channels into sound playing, and corresponding sound sources sounding synchronously with the sound source outputted in last step.

Further, if the buttons corresponding to the sound sources already sounded in steps (B) and (C) leave the sensing areas, the sound sources are played silently.

The disclosure has the beneficial effects in that:
1) the jigsaws with specific patterns are used as switching connection points in the interactive platform and the synchronous sounding method thereof according to the disclosure, a user can combine the jigsaws to let the platform make different sounds, thereby improving the interestingness and interactivity;
2) the sensing circuit board of the disclosure can accurately recognize the sounds corresponding to the jigsaws, the sensing chip reads a medium conductive patter through sensing and detecting capacitance of the conductive printing ink, the cold iron metal, the hot iron metal, the rigid PCB or other conductive mediums specially owned by the jigsaws, the card or the plastic doll, and the sounds can also be accurately made even if the jigsaws are placed at different positions; and
3) a printing technology is used in the disclosure, the jigsaws with different contents are shown through printing, and the disclosure is simple in operation and strong in interactivity.

### BRIEF DESCRIPTION OF THE DRAWINGS

The embodiments of the disclosure are further described hereinafter with reference to the drawings, wherein:
Fig. 1 is a structural schematic diagram in a first embodiment of an interactive platform according to the disclosure;
Fig. 2 is a functional block diagram of a sounding device in the first embodiment according to the disclosure;
Fig. 3 is a decomposition schematic diagram of a sensing circuit board in the first embodiment according to the disclosure;
Fig. 4 is a schematic diagram of a shape of a sensing area in the first embodiment according to the disclosure;
Fig. 5 is a schematic diagram of multiple sets of sensing areas in the first embodiment according to the disclosure;
Fig. 6 is a schematic diagram of an enlarged sensing area in the first embodiment according to the disclosure;
Fig. 7 is a decomposition schematic diagram of jigsaws in the first embodiment according to the disclosure;
Fig. 8 is a structural diagram in a second embodiment according to the disclosure;
Fig. 9 is a schematic diagram of a button and a coded pattern thereof in the second embodiment according to the disclosure; and
Fig. 10 to Fig. 13 are schematic diagrams of other shapes of the button in the second embodiment according to the disclosure.

### DETAILED DESCRIPTION OF THE EMBODIMENTS

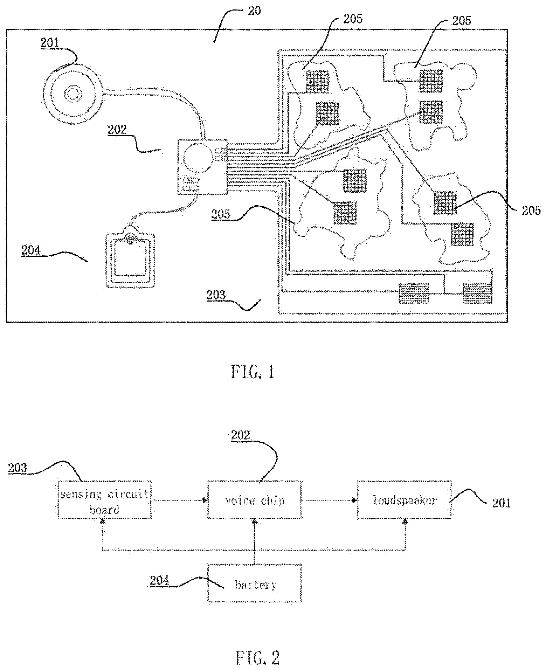

Referring to Fig. 1 to Fig. 7, an electronic sounding book for synchronous sounding triggered playing comprises a book body as well as a sounding device 20 and a button device arranged on the book body. The book body is provided with a book surface, a book bottom and a plurality of book pages; and the sounding device 20 is installed and fixed in the book bottom or a book side.

As shown in Fig. 2, the sounding device 20 comprises a power module as well as a loudspeaker 201, a voice chip 202, and a sensing circuit board 203 respectively connected to the power module. The power module in the embodiment is a battery 204. An input end of the loudspeaker 201 is connected to an output end of the voice chip 202; an output end of the sensing circuit board 203 is connected to an input end of the voice chip 202; and sound sources of A, B, C and D types are pre-stored in the voice chip 202.

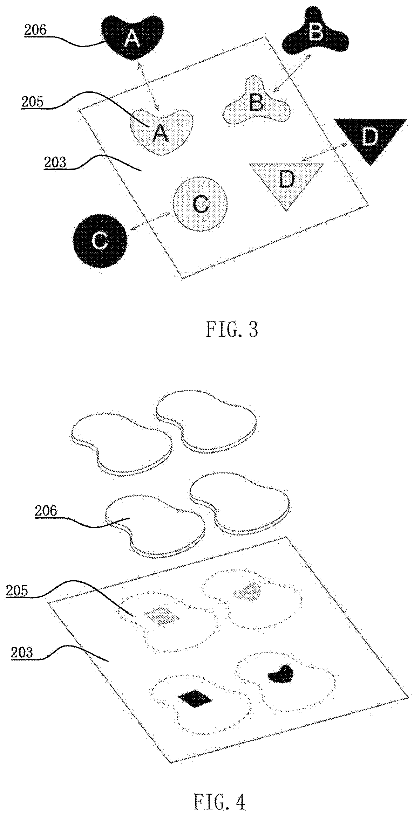

A, B, C and D sensing areas 205 in one-to-one correspondence with the four types of sound sources and triggering the voice chip 202 to output the corresponding sound sources to the loudspeaker 201 to play are arranged on the sensing circuit board 203. The button device comprises four buttons 206 in one-to-one correspondence with the four sensing areas 205 and triggering the corresponding sensing areas 205 to respond, the buttons 206 in the embodiment are jigsaws, which are respectively jigsaw A, jigsaw B, jigsaw C and jigsaw D, as shown in Fig. 3.

Meanwhile, a synchronous sounding method of the interactive platform comprises the following steps of:
(A) starting a power supply and the N sensing areas 205 on the sensing circuit board 203 entering a waiting mode;
(B) when any button 206 is placed into a corresponding sensing area 205, starting all N sound source channels between the sensing circuit board 203 and the voice chip 202, and outputting, by the voice channel responded in the sensing area 205, a corresponding sound source to the loudspeaker 201 for sound playing, and the remaining voice channels playing silently; and
(C) when the remaining sensing areas 205 are triggered by corresponding buttons 206, switching corresponding channels into sound playing, and corresponding sound sources sounding synchronously with the sound source outputted in last step.

If the buttons 206 corresponding to the sound sources already sounded in steps (B) and (C) leave the sensing areas 205, the sound sources are played silently.

In the embodiment, a jigsaw book has four different jigsaws (the jigsaw A, the jigsaw B, the jigsaw C and the jigsaw D) respectively controlling four different sound sources (a sound source A, a sound source B, a sound source C and a sound source D), wherein the sound source A can play sound only if the jigsaw A is placed on a sensing area 205A, the sound source A and the sound source B can synchronously play sound when the jigsaw B is placed on a sensing area 205B, and so on, until all jigsaws (the jigsaw A, the jigsaw B, the jigsaw C and the jigsaw D) are placed on the sensing area 205A, the sensing area 205B, a sensing area 205C and a sensing area 205D, the sound source A, the sound source B, the sound source C and the sound source D play sound synchronously. If the jigsaw B is taken away from the sensing area 205B in process, the sound source B does not play sound, and only the sound source A, the sound source C and the sound source D play sound synchronously.

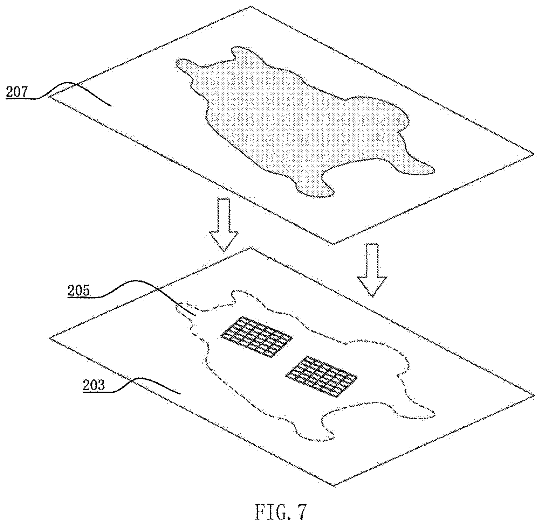

A sensing board in the embodiment is a flexible printed circuit board, a conductive printing ink is printed on a medium regarding to the printed circuit, the medium comprises but is not limited to PET, glue, wood, paper, etc. the sensing board is not limited to the flexible printed circuit board, and can be but is not limited to a rigid PCB, etc. The sensing area 205 is the conductive printing ink with an independently coded pattern, a bottom of the button 206 is provided with a conductive printing ink corresponding to a coded pattern of the sensing area 205 (the sensing area 205 can also be but is not limited to a cold iron metal, a hot iron metal, a rigid PCB, etc.), and a layer of lining paper 207 is provided outside the conductive printing ink at the bottom of the button 206 to cover the conductive printing ink, as shown in Fig. 7. A bottom of the whole jigsaw can be entirely printed by the conductive printing ink, some patterns or shapes can also be printed, but the patterns and the shapes shall be approximately matched with a pattern or a shape of the sensing area 205, which is not always the same.

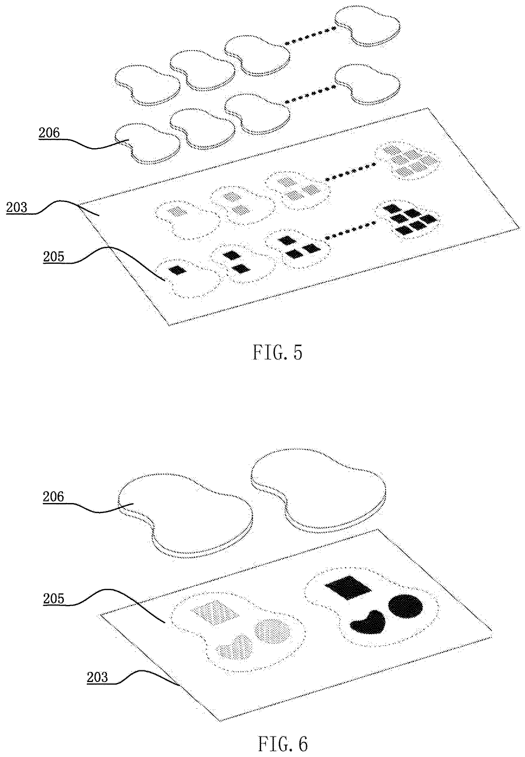

The shape of the sensing area 205 in the embodiment is square with a grid, but the shape of the sensing area can also be a square, a rectangle, a circle or any other shapes. Further, the sensing area 205 can have the grid or a solid core. Each sound source channel is triggered by two sensing areas 205 (which can be one sensing area 205 or multiple sensing area 205 (Fig. 5)). A size and a state of the sensing area are adjustable (Fig. 6), and are generally decided according to a thickness of the lining paper, impedance of conductive printing ink and other factors.

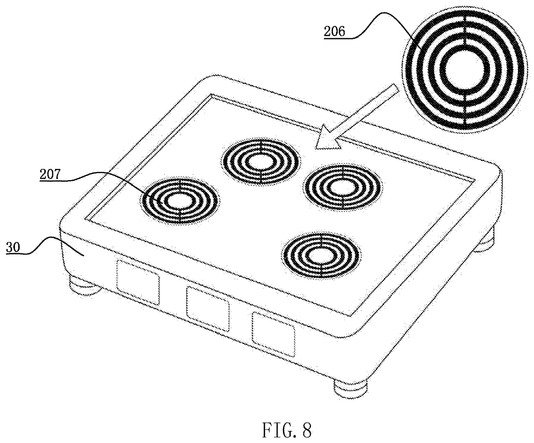

As shown in Fig. 8 to Fig. 13, an interactive stage for synchronous sounding triggered playing in the second embodiment of the disclosure comprises a stage body 30 as well as a sounding device 20 and a button module, the power module can be a driver converting an electric supply, the sounding device 20 in the embodiment has four round sensing boards 207 in the stage, the sensing boards 207 can be but is not limited to a conductive printing ink, a cold iron metal, a hot iron metal or a traditional PCB, and each sensing board can be an independent reader (Fig. 8).

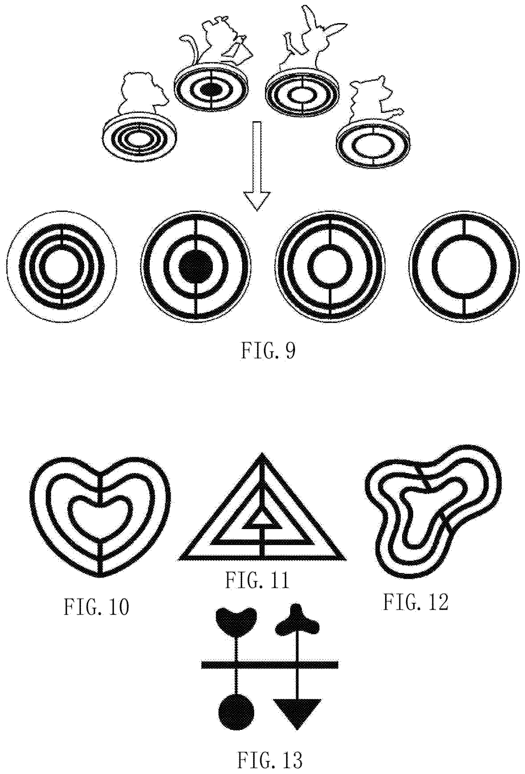

The button 206 placed on the reader can be but not limited to a card, a plastic doll, and so on, of which a bottom is printed with an independent code (Fig. 9) formed by conductive printing ink, cold iron metal, hot iron metal or a traditional PCB. The code in the embodiment is circular, but the code can also be in different shapes, such as a heart shape, a rectangle, or any other regular or irregular shapes (Fig. 10 to Fig. 13). The reader can recognize the identification of the card or the doll (an identification code A) only if any one card or doll with the independent code is placed on any reader, and then informs an electronic component to play corresponding sound source (the sound source A is played), and the remaining sound sources are played silently (the sound sources B, C and D are only played silently).

Then another card or doll (an identification code B) with the independent code is placed on any other reader, the reader can recognize the identification of the card or the doll and informs the electronic component to play corresponding sound source (the sound source B is played), and the remaining sound sources are played silently (the sound sources C and D are only played silently). Since two cards or dolls (identifications A and B) have been placed on two different readers, the sound source A and the sound source B play sound at the same time.

Similarly, more synchronous sound sources can be made only if the cards or the dolls with an identification C and an identification D are placed on different readers. The technical identification code and the reader can be infinitely expanded.

The foregoing descriptions are merely preferred embodiments of the disclosure, but the disclosure is not limited to the foregoing embodiments. Any technical solution that achieves the object of the disclosure by basically the same means shall fall within the protection scope of the disclosure.

## Claims

1. A sounding interactive platform for synchronous sounding triggered playing, comprising a platform body as well as a sounding device and a button device arranged on the platform body, **characterized in that**: the sounding device comprises a power module as well as a loudspeaker, a voice chip, and a sensing circuit board respectively connected to the power module; an input end of the loudspeaker is connected to an output end of the voice chip; an output end of the sensing circuit board is connected to an input end of the voice chip; N types of sound sources are pre-stored in the voice chip; N sensing areas in one-to-one correspondence with the N types of sound sources and triggering the voice chip to output the corresponding sound sources to the loudspeaker to play are arranged on the sensing circuit board; and the button device comprises N buttons in one-to-one correspondence with the N sensing areas and triggering the corresponding sensing areas to respond, wherein N≥2.

2. The sounding interactive platform for synchronous sounding triggered playing according to claim 1, **characterized in that**: the platform body is an electronic book body or a stage body.

3. The sounding interactive platform for synchronous sounding triggered playing according to claim 1, **characterized in that**: the sensing area is a conductive printing ink with an independently coded pattern; a cold iron metal, a hot iron metal or a rigid PCB; and a bottom of the button is provided with a conductive printing ink, a metal for cold stamping, a metal for hot stamping or a rigid PCB corresponding to a coded pattern of the sensing area.

4. The sounding interactive platform for synchronous sounding triggered playing according to claim 3, **characterized in that**: the button is a jigsaw, a card or a plastic doll.

5. The sounding interactive platform for synchronous sounding triggered playing according to claim 3, **characterized in that**: the coded pattern is heart-shaped, circular, rectangular, elliptical or triangular.

6. The sounding interactive platform for synchronous sounding triggered playing according to claim 3, **characterized in that**: a layer of lining paper is provided outside the conductive printing ink at the bottom of the button to cover the conductive printing ink.

7. A synchronous sounding method for the interactive platform according to any one of claims 1 to 6, comprising the following steps of: (A) starting a power supply and the N sensing areas on the sensing circuit board entering a waiting mode; (B) when any button is placed into a corresponding sensing area, starting all N sound source channels between the sensing circuit board and the voice chip, and outputting, by the voice channel responded in the sensing area, a corresponding sound source to the loudspeaker for sound playing, and the remaining voice channels playing silently; and (C) when the remaining sensing areas are triggered by corresponding buttons, switching corresponding channels into sound playing, and corresponding sound sources sounding synchronously with the sound source outputted in last step.

8. The synchronous sounding method of the interactive platform according to claim 7, **characterized in that**: if the buttons corresponding to the sound sources already sounded in steps (B) and (C) leave the sensing areas, the sound sources are played silently.
